Europäisches Patentamt

European Patent Office

Office européen des brevets

(19)

(11) EP 0 689 664 B1

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(21) Anmeldenummer: **94908281.2**

(22) Anmeldetag: **01.03.1994**

(51) Int Cl.6: **G01B 11/02**

(86) Internationale Anmeldenummer:
**PCT/DE94/00230**

(87) Internationale Veröffentlichungsnummer:
**WO 94/21984 (29.09.1994 Gazette 1994/22)**

(54) **VORRICHTUNG ZUR LAGEBESTIMMUNG EINES POSITIONIERKÖRPERS RELATIV ZU EINEM BEZUGSKÖRPER**

DEVICE FOR DETERMINING THE POSITION OF A BODY TO BE POSITIONED WITH RESPECT TO A REFERENCE BODY

DISPOSITIF POUR LA DETERMINATION DE LA POSITION D'UN CORPS A POSITIONNER PAR RAPPORT A UN CORPS DE REFERENCE

(84) Benannte Vertragsstaaten:
**AT BE CH DE FR GB LI LU NL**

(30) Priorität: **17.03.1993 DE 4308456**

(43) Veröffentlichungstag der Anmeldung:
**03.01.1996 Patentblatt 1996/01**

(73) Patentinhaber: **Temacon Technology Marketing Consultans GmbH**
**30175 Hannover (DE)**

(72) Erfinder: **KELLNER, Helmut**
**D-26802 Moormerland (DE)**

(74) Vertreter: **Körner, Peter**
**Thömen & Körner**
**Zeppelinstrasse 5**
**30175 Hannover (DE)**

(56) Entgegenhaltungen:
**WO-A-92/11507          WO-A-92/14117**
**DE-A- 3 909 856**

**Beschreibung**

Die Erfindung betrifft eine Vorrichtung zur Lagebestimmung eines Positionierkörpers relativ zu einem Bezugskörper nach dem Oberbegriff des Anspruchs 1.

Eine solche Vorrichtung dient z. B. dazu, bei der Steuerung von Meß- und Fertigungsmaschinen Wegstrecken zwischen längsverschieblichen Gegenständen, wie Meßköpfen, Greif- oder Montagearmen zu erfassen. Dabei ist die Genauigkeit, mit der diese Wegstrecken ermittelt werden können, von ausschlaggebender Bedeutung für die Fertigungsgenauigkeit des Automaten.

Aus der DE-OS 39 09 856 ist bereits ein Verfahren und eine Vorrichtung bekannt, das eine hohe Meßgenauigkeit unabhängig von einer exakten Führung des Abtasters ermöglicht. Dabei werden von einem Abtaster drei Marken eines Maßstabes ausgewertet. Bei zwei Marken wäre der zwischen einem Projektionszentrum und diesen Marken gebildete Projektionswinkel noch davon abhängig, in welchem Abstand sich das Projektionszentrum über den Marken befindet und wie weit er seitlich versetzt ist. Bei drei Marken gelingt es, über den weiteren Projektionswinkel zwischen dem Projektionszentrum, dieser weiteren Marke und einer der anderen Marken das Projektionszentrum exakt zu bestimmen. Für eine Kombination von zwei Kombinationswinkeln existiert nämlich nur ein einziger Ort, auf dem sich das Projektionszentrum befinden kann.

Damit die Marken des Maßstabes auf einer Projektionsfläche des Abtasters abgebildet werden können, muß der Maßstab gleichmäßig beleuchtet sein. Dies könnte durch eine Auflicht- oder Durchlichtbeleuchtung erfolgen. Allerdings erfordert eine Beleuchtungsvorrichtung zusätzlichen Raumbedarf, der Miniaturisierungsbestrebungen entgegensteht.

Der Erfindung liegt die Aufgabe zugrunde, eine Vorrichtung der eingangs genannten Art dahingehend zu verbessern, daß der Raumbedarf des Maßstabes ohne Einbuße der Meßgenauigkeit verringert werden kann.

Diese Aufgabe wird bei der im Oberbegriff des Anspruch 1 beschriebenen Vorrichtung durch die im Kennzeichen angegebenen Merkmale gelöst.

Bei der Erfindung werden mittels der Projektoren Licht-Marken auf den Maßstab projiziert, aus welchen die Lagekoordinaten des Projektionszentrums bestimmt werden. Es werden also nicht mehr Marken eines Maßstabes auf der Projektionsfläche eines separaten Abtasters abgebildet, sondern der Maßstab ist selbst Projektionsfläche und umfaßt optische Abtaster zur Erfassung der abgebildeten Licht-Marken. Dadurch entfällt eine gesonderte Beleuchtungsvorrichtung, wie sie bisher zur Beleuchtung der Marken des Maßstabes erforderlich war. Der Raumbedarf wird dadurch erheblich verringert.

Ein weiterer Vorteil der erfindungsgemäßen Vorrichtung besteht darin, daß wegen der von den Projektoren ausgesandten Lichtstrahlen oder Lichtebenen eine abstandsunabhängige Abbildungsschärfe der Lichtstrahlen oder Lichtebenen auf den optischen Abtastern erzielt wird, wodurch ein größerer Abstandsmeßbereich in Richtung der Z-Achse erzielt wird, als mit einer fest eingestellten Abbildungsoptik.

Die Projektoren können sowohl divergierend, konvergierend als auch divergierend und konvergierend angeordnet sein.

Bei kombinierter divergierender und konvergierender Anordnung werden die Koordinaten von zwei räumlich getrennten Projektionszentren ermittelt, die jedoch einen festen räumlichen Bezug zueinander haben. Die gleichzeitige Bestimmung der Koordinaten beider Projektionszentren ermöglicht es, Meßfehler zu kompensieren und dadurch die Meßgenauigkeit weiter zu verbessern.

Für die Ausführung der Projektoren bieten sich zwei Ausgestaltungsmöglichkeiten. Eine Ausführung sieht vor, daß die Projektoren jeweils aus einer Laserlichtquelle mit einer Optik und einer Blende bestehen, eine andere Ausführung sieht vor, daß die Projektoren aus einer gemeinsamen Laserlichtquelle mit einer Lichtstrahl- oder Lichtebenenaufteilungsoptik und Blenden bestehen.

Die erstgenannte Ausgestaltung ist durch die erforderliche Anzahl von Laserlichtquellen vom Aufwand höher, bietet aber die Möglichkeit, daß die Projektoren unabhängig voneinander justiert werden können. Die letztere Ausgestaltung erfordert einen erhöhten Aufwand für die Justierung, dafür ist aber der bauliche Aufwand und der Raumbedarf geringer als bei der ersteren Ausgestaltung.

Vorzugsweise sind Blenden vorgesehen, die zur Erzeugung von Lichtstrahlen als Lochblenden und zur Erzeugung von Lichtebenen als Spaltblenden ausgebildet sind.

Mit dieser Ausgestaltung der Blenden gelingt es, aus dem Lichtkegel einen schmalen Bereich auszusondern, der jeweils nur eine oder zwei Abtaster- oder Pixelelemente des optischen Abtasters beleuchtet und somit eine eindeutige Auswertung ermöglicht, die eine hohe Meßgenauigkeit der Vorrichtung gewährleistet.

Vorzugsweise sind die optischen Abtaster durch eine CCD-Zeile gebildet.

Derartige Abtaster zeichnen sich durch kleine Baugröße und sehr hohe Auflösung aus und sind bei hoher mechanischer Präzision kostengünstig erhältlich, da sie für die Verwendung in Handy-Scannern und Telefaxgeräten in großen Stückzahlen hergestellt werden.

Gemäß einer Weiterbildung sind die optischen Abtaster mit einem Rechner verbunden, welcher aus der Helligkeitsverteilung eines (einer) auf mehrere Abtaster fallenden Lichtstrahls (Lichtebene) das Mittenmaximum des Lichtstrahls (der Lichtebene) bestimmt und dieses der optischen Achse (Ebene) zuordnet.

Durch diese Maßnahme ist die Genauigkeit nicht auf das durch die Abstände der Abtaster gebildete Raster beschränkt, sondern ermöglicht auch die Erfassung von Zwischenwerten.

Bei divergierender Anordnung der Projektoren liegt das Projektionszentrum auf der den Projektoren zugewandten Seite des Maßstabs und bei konvergierend angeordneten Projektoren auf der anderen Seite des Maßstabs.

Durch Verwendung sowohl konvergierend als auch divergierend angeordneter Projektoren ergeben sich zwei Projektionszentren, die eine feste räumliche Zuordnung besitzen und so durch gemeinsame Auswertung der Meßwerte eine Fehlerkompensation ermöglichen.

Der mit dem optischen Abtaster verbundene Rechner nimmt die Berechnung der Koordinaten des Projektionszentrums nach folgenden trigonometrischen Funktionen und Gleichungen vor:

$$X_0 = (Y_1 - Y_2) * \frac{(Y_1 * d_2 + Y_2 * d_1) * 2}{(Y_1 - Y_2)^2 + (d_1 + d_2)^2} + X_2$$

$$Z_0 = (d_1 + d_2) * \frac{(Y_1 * d_2 + Y_2 * d_1) * 2}{(Y_1 - Y_2)^2 + (d_1 + d_2)^2}$$

mit

$$d_1 = X_2 - X_1, d_2 = X_3 - X_2,$$

$$Y_1 = \frac{d_1}{2 * \tan \alpha}, Y_2 = \frac{d_2}{2 * \tan \beta}.$$

Dabei bezeichnet $\alpha$ den Projektionswinkel zwischen dem Projektionszentrum sowie einer ersten und einer zweiten optischen Achse (Ebene), $\beta$ den Projektionswinkel zwischen dem Projektionszentrum sowie einer zweiten und dritten optischen Achse (Ebene), $X_1$, $X_2$, $X_3$ einzelne von der optischen Achse (Ebene) gekreuzte Abtaster, mit $X_2$ als Kreuzung mit der Mittelsenkrechten des Bezugskörpers (38), in einer Reihe von Abtastern und $d_1$ und $d_2$ die Mittenabstände zwischen den Abtastern $X_2$ und $X_1$ bzw. $X_3$ und $X_2$.

Es können somit gleichzeitig zwei Koordinaten, nämlich einmal in Richtung der Maßstabsachse und zum anderen senkrecht zur Maßstabsachse ermittelt werden.

Eine Weiterbildung sieht vor, daß zusätzlich auch eine Bestimmung des Neigungswinkels des Positionierkörpers gegenüber dem Bezugskörper trigonometrisch nach folgenden Funktionen oder Gleichungen berechnet wird:

$$f = \arctan \left( \frac{d_3}{Z_0} \right)$$

mit $d_3 = X_2 - X_0$.

Dabei ist $d_3$ der Abstand zwischen dem Schnittpunkt $X_0$ des Lotes des Projektionszentrums auf dem Maßstab und dem Schnittpunkt $X_2$ der Mittelsenkrechten des Bezugskörpers mit dem Maßstab.

Es besteht somit die Möglichkeit, mit einer einzigen Kombination aus Maßstab und Projektoren drei Koordinaten zu bestimmen.

Eine Weiterbildung sieht vor, daß zwei in einer Ebene angeordnete Maßstäbe vorgesehen sind und jedem dieser Maßstäbe eine Projektoranordnung zugeordnet ist.

Zusätzlich zu einer Ausbildung mit nur einem Maßstab und einer Projektoranordnung kann hierbei auch ein Drehwinkel senkrecht und einer parallel zur Ebene ermittelt werden, in der die Maßstäbe liegen. Diese Ermittlung geschieht jeweils durch Differenzbildung der Koordinaten in Längsrichtung des Maßstabs bzw. im Abstand des Maßstabes unter Berücksichtigung der gegenseitigen Abstände der Projektionszentren.

Bei einer anderen Ausführung ist vorgesehen, daß die Maßstäbe unter einen Winkel von vorzugsweise 90° am Positionierkörper oder Bezugskörper angeordnet sind und beiden Maßstäben ebenfalls je eine Projektoranordnung zugeordnet ist.

Diese Ausgestaltung ermöglicht es, Koordinaten in drei Koordinatenrichtungen zu erfassen und zwei Drehwinkel anzugeben.

Schließlich sieht eine Kombination vor, daß zwei parallele Maßstäbe in einer Ebene und ein weiterer Maßstab in einem Winkel zu dieser Ebene angeordnet ist. Auch diesen drei Maßstäben sind jeweils Projektoranordnungen zugeordnet.

Bei dieser Anordnung ist es möglich, sowohl alle drei Koordinatenrichtungen als auch alle Drehwinkel um diese Koordinatenrichtungen anzugeben. Dadurch läßt sich die Raumlage eines Positionierkörpes relativ zu einem Bezugskörper in allen sechs Freiheitsgraden exakt angeben.

Weiterbildungen und vorteilhafte Ausgestaltungen der Erfindung ergeben sich aus den Ansprüchen, der weiteren Beschreibung und der Zeichnung, anhand der die Erfindung näher erläutert wird.

In der Zeichnung zeigen:

Fig. 1    eine schematische Seitenansicht eines Bezugskörpers mit Projektoren in divergierender Anordnung über einem Positionierkörper mit einem Maßstab,

Fig. 2    eine Fig. 1 entsprechende schematische Seitenansicht, jedoch mit konvergierend angeordneten Projektoren,

Fig. 3    eine schematische Seitenansicht eines Bezugskörpers über einem Positionierkörper mit sowohl konvergierend als divergierend angeordneten Projektoren,

Fig. 4      eine weitere Seitenansicht ähnlich Fig. 1, bei der der Positionierkörper gegenüber dem Bezugskörper geneigt ist zur Erläuterung der Berechnungsformel zur Bestimmung des Neigungswinkels und

Fig. 5      eine perspektivische Ansicht eines Positionierkörpers mit Maßstäben und einem Bezugskörper mit Projektoren zur Erfassung aller räumlichen Parameter.

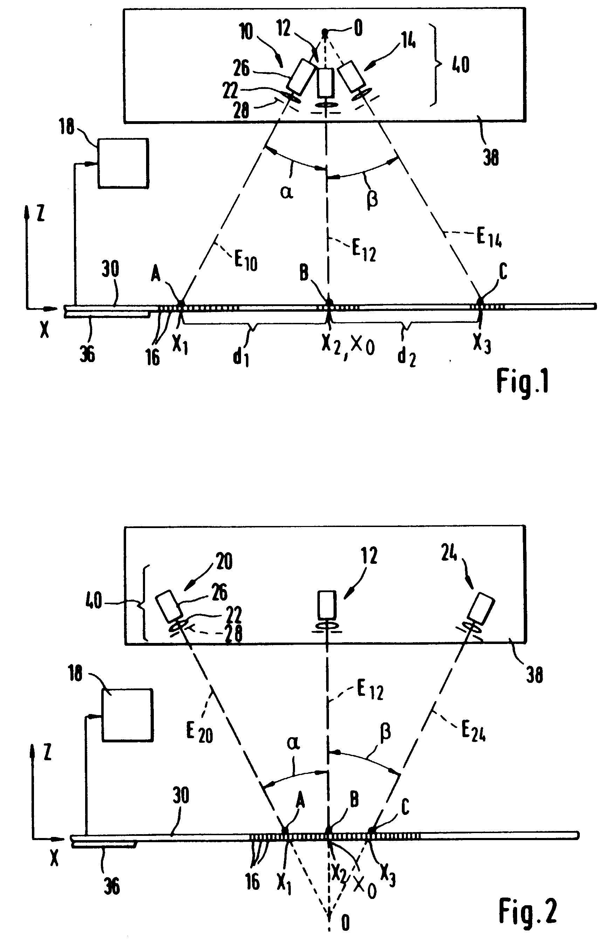

Fig. 1 zeigt eine schematische Seitenansicht einer Vorrichtung zur Lagebestimmung eines Positionierkörpers 36 relativ zu einem Bezugskörper 38, wobei der Bezugskörper 38 drei divergierend angeordnete Projektoren 10, 12, 14 umfaßt, die Lichtebenen auf einen Maßstab 30 eines Positionierkörpers 36 werfen und auf diese Weise Licht-Marken A, B, C erzeugen. Die Licht-Marken A, B, C werden durch optische Abtaster 16 erfaßt, die aus aneinandergereihten Abtaster- oder Pixelelementen bestehen erfaßt. Die Projektoren 10, 12, 14 bestehen im einzelnen jeweils aus einer Laserlichtquelle 26 mit einer Optik 22 und einer Spaltblende 28. Statt der hier dargestellten drei Projektoren 10, 12, 14 können auch mehr als drei Projektoren vorhanden sein. Für eine Bestimmung der Koordinaten $X_0$ und $Z_0$ sind jedoch mindestens drei Projektoren erforderlich. Die Projektoren 10, 12, 14 sind so ausgerichtet, daß der mittlere Projektor 12 eine Lichtebene aussendet, die mit der Mittelsenkrechten des Bezugskörpers 38 zusammenfällt, während die Lichtebenen der Projektoren 10 und 14 jeweils einen Winkel $\alpha$ bzw. $\beta$ zur Lichtebene des Projektors 12 einnehmen.

Die Lichtebenen kreuzen optische Abtaster 16, die hier in Form einer CCD-Zeile ausgebildet sind. Diejenigen Abtaster 16, auf die die drei Lichtebenen fallen, sind mit X1, X2 und X3 bezeichnet. Diesen Abtastern 16 sind Koordinaten zugeordnet, die sich aus den Mittenabständen der einzelnen Abtaster 16 und ihrer Ordnungszahl ergeben.

An die Abtaster 16 ist ein Rechner 18 angeschlossen, welcher aus der Helligkeitsverteilung einer auf mehrere Abtaster 16 fallenden Lichtebene das Mittenmaximum der Lichtebene bestimmt. Auf diese Weise kann die optische Ebene $E_{10}$, $E_{12}$, $E_{14}$ mit einer höheren Auflösung als dem Rasterabstand der einzelnen Abtaster 16 bestimmt werden.

Weiterhin berechnet der Rechner 18 die Koordinaten $X_0$ und $Z_0$ des Projektionszentrums O nach folgenden trigonometrischen Funktionen und Gleichungen:

$$X_0 = (Y_1 - Y_2) * \frac{(Y_1 * d_2 + Y_2 * d_1) * 2}{(Y_1 - Y_2)^2 + (d_1 + d_2)^2} + X_2$$

$$Z_0 = (d_1 + d_2) * \frac{(Y_1 * d_2 + Y_2 * d_1) * 2}{(Y_1 - Y_2)^2 + (d_1 + d_2)^2}$$

mit

$$d_1 = X_2 - X_1, \quad d_2 = X_3 - X_2,$$

$$Y_1 = \frac{d_1}{2 * \tan \alpha}, \quad Y_2 = \frac{d_2}{2 * \tan \beta}.$$

Dabei bezeichnet $\alpha$ den Projektionswinkel zwischen dem Projektionszentrum O sowie einer ersten und einer zweiten optischen Achse (Ebene) $E_{10}$, $E_{12}$, $\beta$ den Projektionswinkel zwischen dem Projektionszentrum O sowie einer zweiten und dritten optischen Achse (Ebene) $E_{12}$, $E_{14}$, $X_1$, $X_2$, $X_3$ einzelne von der optischen Achse (Ebene) $E_{10}$, $E_{12}$, $E_{14}$, gekreuzte Abtaster, mit $X_2$ als Kreuzung mit der Mittelsenkrechten des Bezugskörpers (38), in einer Reihe von Abtastern und $d_1$ und $d_2$ die Mittenabstände zwischen den Abtastern $X_2$ und $X_1$ bzw. $X_3$ und $X_2$.

Fig. 2 zeigt eine andere Ausgestaltung, bei der die Projektoren 20, 12, 24 konvergierend angeordnet sind. Das Projektionszentrum O liegt hierbei auf der gegenüberliegenden Seite des Maßstabes 30. Die Ermittlung der Koordinaten $X_0$, $Z_0$ erfolgt analog zu der Ausgestaltung gemäß Fig. 1.

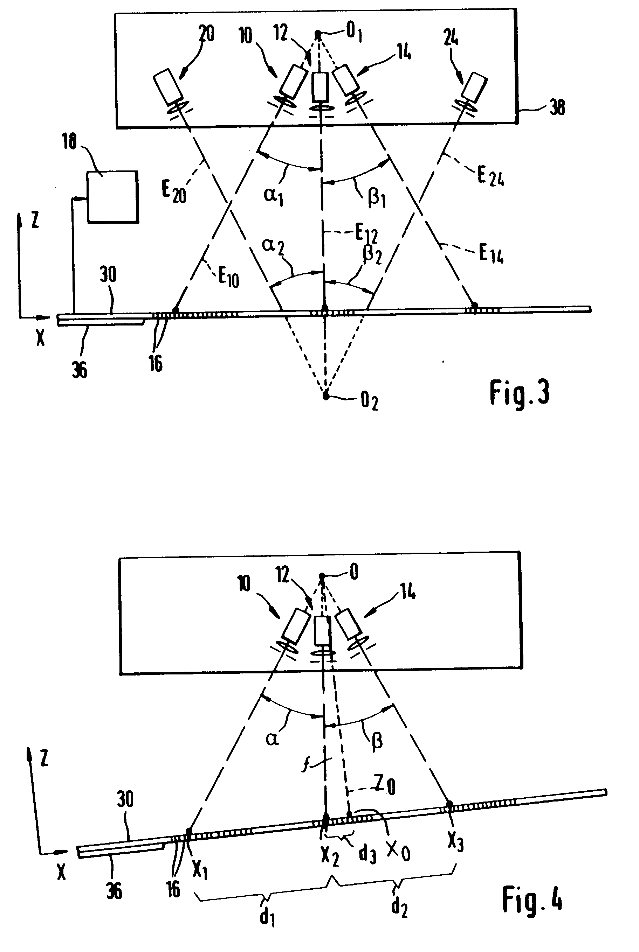

Fig. 3 zeigt eine weitere Ausführung, bei der der Bezugskörper 38 sowohl konvergierend als auch divergierend angeordnete Projektoren 10, 12, 14; 20, 24 umfaßt. Dabei sind die Projektoren 10, 12 und 14 divergierend angeordnet und die Projektoren 20 und 24 unter Einbeziehung des Projektors 12 konvergierend angeordnet.

Bei dieser Anordnung kann sowohl das Projektionszentrum $O_1$, das auf der den Projektoren 10, 12, 14; 20, 24 zugewandten Seite des Maßstabes 30 liegt, bestimmt werden als auch das Projektionszentrum $O_2$ auf der anderen Seite des Maßstabes 30. Die zugehörigen Projektionswinkel $\alpha$ und $\beta$ tragen den gleichen Index wie die Projektionszentren.

Während bei den Darstellungen gemäß Fig. 1 - 3 der Positionierkörper 36 parallel zum Bezugskörper 38 ausgerichtet ist, zeigt Fig. 4 eine Ausführung ähnlich Fig. 1, bei der der Positionierkörper 36 jedoch unter dem Neigungswinkel $f$ steht. Dieser Neigungswinkel $f$ befindet sich zwischen dem Lot $X_0$ des Projektionszentrums O auf dem Maßstab 30 und dem Schnittpunkt $X_2$ der Mittelsenkrechten des Bezugskörpers 38 mit dem Maßstab 30. Die Berechnung erfolgt nach folgender trigonometrischer Funktion:

$$f = \arctan \left(\frac{d_3}{Z_0}\right)$$

mit $d_3 = X_2 - X_0$

Dabei ist $d_3$ der Abstand zwischen dem Schnittpunkt $X_0$ des Lotes des Projektionszentrums (O) auf dem Maßstab (30) und dem Schnittpunkt $X_2$ der Mittel-

senkrechten des Bezugskörpers 38 mit dem Maßstab 30.

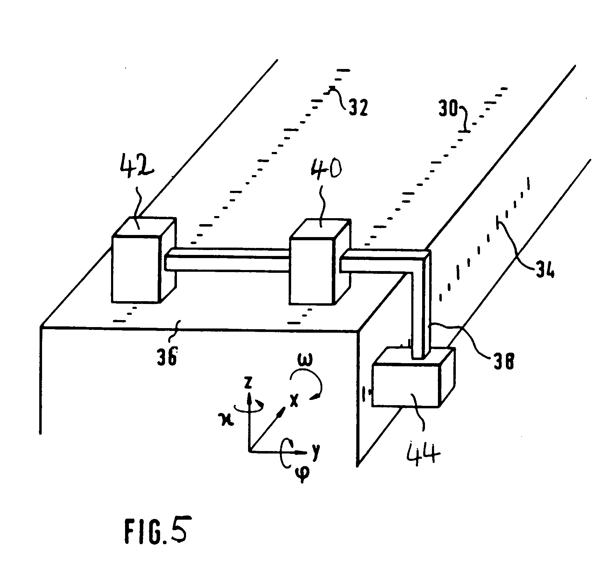

Fig. 5 zeigt einen Positionierkörper 36 mit drei Maßstäben 30, 32 und 34 und drei Projektoranordnungen 40, 42, 44 auf einem Bezugskörper 38. Jede der Projektoranordnungen 40, 42, 44 kann so ausgestaltet sein, wie es die Figuren 1 bis 4 veranschaulichen. Ein erster 30 und zweiter Maßstab 32 befindet sich auf der Breitseite des Bezugskörpers 38. Ein dritter Maßstab 34 ist auf der Schmalseite des Bezugskörpers 38 angeordnet. Die Schmalseite und die Breitseite des Bezugskörpers 38 sind in einem Winkel von 90° ausgerichtet. Die genaue Lage des Positionierkörpers 36 gegenüber dem Bezugskörper 38 kann an Hand der von den Projektoranordnungen 40, 42, 44 ausgesandten Lichtebenen und von den Abtastern 16 ermittelten Abtastwerte bestimmt werden. Zur Bestimmung der X-Richtung eignen sich im Prinzip die Daten jedes der drei Abtaster der Maßstäbe 30, 32, 34. Sie stimmen hinsichtlich der X-Richtung überein. Zur Bestimmung der Y-Richtung eignen sich die Daten des Abtasters des Maßstabes 34, wobei hier der Abstand zwischen der Projektoranordnung 44 und der Maßstabsebene ermittelt wird.

Für die Bestimmung der Z-Richtung sind die Daten der Abtaster der Maßstäbe 30 oder 32 auszuwerten.

Während bei paralleler Ausrichtung von Positionierkörper und Bezugskörper die Abstände gleich sind, ergeben sich Unterschiede bei einem Drehwinkel w. Der Drehwinkel w kann somit aus der Differenz der Abstände und dem Abstand der Projektionszentren der Projektoranordnungen 40, 42 ermittelt werden.

Die Bestimmung des Drehwinkels æ erfolgt über die Differenz der Daten der Abtaster der Maßstäbe 30 und 32 in X-Richtung unter Berücksichtigung ihrer gegenseitigen Abstände.

Schließlich wird der Drehwinkel $f$ nach der vorerwähnten Formel

$$f = \arctan\left(\frac{d_3}{Z_0}\right)$$

berechnet.

**Patentansprüche**

1. Vorrichtung zur Lagebestimmung eines Positionierkörpers (36) relativ zu einem Bezugskörper (38), wobei der Positionierkörper (36) einen Maßstab (30) trägt und Koordinaten ($X_0$, $Z_0$) eines Projektionszentrums (O) aus den Projektionswinkeln ($\alpha$, $\beta$) zwischen dem Projektionszentrum (O) und wenigstens drei projizierter Marken (A, B, C) sowie aus dem gegenseitigen Abstand der Marken (A, B, C) trigonometrisch berechnet werden, dadurch gekennzeichnet, daß die projizierten Marken auf den Maßstab (30) projizierte Licht-Marken (A, B, C) sind, daß das Projektionszentrum (O) durch den gemeinsamen Schnittpunkt der optischen Achsen oder die gemeinsame Schnittlinie der optischen Ebenen ($E_{10}$, $E_{12}$, $E_{14}$; $E_{20}$, $E_{24}$) wenigstens dreier auf dem Bezugskörper (38) divergierend und/oder konvergierend angeordneter Projektoren (10, 12, 14; 20, 24) gebildet ist, die Lichtstrahlen oder Lichtebenen aussenden, und daß die projizierten Licht-Marken (A, B, C) auf dem Maßstab (30) durch optische Abtaster (16) erfaßt werden.

2. Vorrichtung nach Anspruch 1, dadurch gekennzeichnet, daß die Projektoren (10, 12, 14; 20, 24) jeweils aus einer Laserlichtquelle (26) mit einer Optik (22) und einer Blende (28) bestehen.

3. Vorrichtung nach Anspruch 1, dadurch gekennzeichnet, daß die Projektoren (10, 12, 14; 20, 24) aus einer gemeinsamen Laserlichtquelle mit einer Lichtstrahl- oder Lichtebenen-Aufteilungsoptik und Blenden bestehen.

4. Vorrichtung nach Anspruch 2 oder 3, dadurch gekennzeichnet, daß die Blenden (28) zur Erzeugung von Lichtstrahlen als Lochblenden und zur Erzeugung von Lichtebenen als Spaltblenden ausgebildet sind.

5. Vorrichtung nach einem der Ansprüche 1 bis 4, dadurch gekennzeichnet, daß die optischen Abtaster (16) durch eine CCD-Zeile gebildet sind.

6. Vorrichtung nach einem der Ansprüche 1 bis 5, dadurch gekennzeichnet, daß die optischen Abtaster (16) mit einem Rechner (18) verbunden sind, welcher aus der Helligkeitsverteilung eines einer auf mehrere Abtaster (16) fallenden Lichtstrahls Lichtebene das Mittenmaximum des Lichtstrahls der Lichtebene bestimmt und dieses der optischen Achse Ebene ($E_{10}$, $E_{12}$, $E_{14}$; $E_{20}$, $E_{24}$) zuordnet.

7. Vorrichtung nach einem der Ansprüche 1 bis 6, dadurch gekennzeichnet, daß das Projektionszentrum (O) bei divergierend angeordneten Projektoren (10, 12, 14) auf der den Projektoren (10, 12, 14) zugewandten Seite des Maßstabs (30) und bei konvergierend angeordneten Projektoren (12, 20, 24) auf der den Projektoren (10, 12, 14) abgewandten Seite des Maßstabs (30) liegt.

8. Vorrichtung nach einem der Ansprüche 1 bis 7, dadurch gekennzeichnet, daß der mit den optischen Abtastern (16) verbundene Rechner (18) die Berechnung der Koordinaten ($X_0$, $Z_0$) des Projektionszentrums (O) nach folgenden trigonometrischen Funktionen und Gleichungen durchführt:

$$X_0 = (Y_1 - Y_2) * \frac{(Y_1 * d_2 + Y_2 * d_1) * 2}{(Y_1 - Y_2)^2 + (d_1 + d_2)^2} + X_2$$

$$Z_0 = (d_1 + d_2) * \frac{(Y_1 * d_2 + Y_2 * d_1) * 2}{(Y_1 - Y_2)^2 + (d_1 + d_2)^2}$$

mit

$$d_1 = X_2 - X_1, \, d_2 = X_3 - X_2,$$

$$Y_1 = \frac{d_1}{2 * \tan \alpha}, \, Y_2 = \frac{d_2}{2 * \tan \beta}$$

wobei $\alpha$ den Projektionswinkel zwischen dem Projektionszentrum (O) sowie einer ersten und einer zweiten optischen Achse Ebene ($E_{10}$, $E_{12}$; $E_{20}$; $E_{12}$), $\beta$ den Projektionswinkel zwischen dem Projektionszentrum (O) sowie einer zweiten und dritten optischen Achse Ebene ($E_{12}$, $E_{14}$; $E_{12}$; $E_{24}$) bezeichnet, $X_1$, $X_2$, $X_3$ einzelne von der optischen Achse Ebene ($E_{10}$, $E_{12}$, $E_{14}$; $E_{20}$, $E_{24}$) gekreuzte optische Abtaster (16) in einer Reihe von Abtastern, mit $X_2$ als Kreuzung mit der Mittelsenkrechten des Bezugskörpers (38), sind und $d_1$ und $d_2$ die Mittenabstände zwischen den Abtastern $X_2$ und $X_1$ bzw. $X_3$ und $X_2$ sind, wobei $\alpha$ der Strecke $d_1$ und $\beta$ der Strecke $d_2$ gegenüberliegt.

9. Vorrichtung nach Anspruch 8, <u>dadurch gekennzeichnet</u>, daß der Rechner (18) zusätzlich eine Bestimmung des Neigungswinkel $f$ des Positionierkörpers (36) gegenüber dem Bezugskörper (38) trigonometrisch berechnet nach Funktionen und Gleichungen:

$$f = \arctan \left(\frac{d_3}{Z_0}\right)$$

mit $d_3 = X_2 - X_0$
wobei $d_3$ der Abstand zwischen dem Schnittpunkt $X_0$ des Lotes des Projektionszentrums (O) auf dem Maßstab (30) und dem Schnittpunkt $X_2$ der Mittelsenkrechten des Bezugskörpers (38) mit dem Maßstab (30) ist.

10. Vorrichtung nach einem der Ansprüche 1 bis 9, <u>dadurch gekennzeichnet</u>, daß auf dem Positionierkörper (36) zwei parallele Maßstäbe (30, 32) angeordnet sind, die in einer Ebene liegen, und daß jedem Maßstab (30, 32) eine auf dem Bezugskörper (38) angeordnete Projektoranordnung 40, 42 aus wenigstens je drei Projektoren (10, 12, 14) zugeordnet sind.

11. Vorrichtung nach einem der Ansprüche 1 bis 9, <u>dadurch gekennzeichnet</u>, daß auf dem Positionierkörper (36) zwei unter einem Winkel von vorzugsweise 90° stehende Maßstäbe (30, 34) angeordnet sind und daß jedem Maßstab (30, 34) eine auf dem Bezugskörper (38) angeordnete Projektoranordnung 40, 44 aus wenigstens je drei Projektoren (10, 12, 14) zugeordnet sind.

12. Vorrichtung nach einem der Ansprüche 1 bis 9, <u>dadurch gekennzeichnet</u>, daß auf dem Positionierkörper (36) drei Maßstäbe (30, 32, 34) angeordnet sind, von denen zwei (30, 32) in einer Ebene liegen und ein dritter (34) in einem Winkel von vorzugsweise 90° zu den beiden anderen Maßstäben (30, 32) ausgerichtet ist und daß jedem Maßstab (30, 32, 34) eine auf dem Bezugskörper (38) angeordnete Projektoranordnung (40, 42, 44) aus wenigstens je drei Projektoren (10, 12, 14) zugeordnet sind.

## Claims

1. Apparatus for determining the position of a positioning body (36) relative to a reference body (38), the positioning body (36) carrying a scale (30) and trigonometrically calculating coordinates ($X_0$, $Z_0$) of a perspective centre (0) from the projection angles ($\alpha$, $\beta$) between the perspective centre (0) and at least three projected marks (A, B, C), as well as the mutual spacing of the marks (A, B, C), characterized in that the projected marks are light marks (A, B, C) projected onto the scale (30), that the perspective centre (0) is formed by the common intersection of the optical axes or the common section line of the optical planes ($E_{10}$, $E_{12}$, $E_{14}$; $E_{20}$, $E_{24}$) of at least three projectors (10, 12, 14; 20, 24) arranged in diverging and/or converging manner on the reference body (38), which emit light beams or planes and that the projected light marks (A, B, C) on the scale (30) are detected by optical scanners (16).

2. Apparatus according to claim 1, characterized in that the projectors (10, 12, 14; 20, 24) in each case comprise a laser light source (26) with an optics (22) and a diaphragm (28).

3. Apparatus according to claim 1, characterized in that the projectors (10, 12, 14; 20, 24) comprise a common laser light source with a laser beam or plane splitting optics and diaphragms.

4. Apparatus according to claim 2 or 3, characterized in that the diaphragms (28) for producing light beams are constructed as pinhole diaphragms and for producing light planes as slit diaphragms.

5. Apparatus according to one of the claims 1 to 4, characterized in that the optical sensors (16) are formed by a CCD row.

6. Apparatus according to one of the claims 1 to 5, characterized in that the optical scanners (16) are connected to a computer (18), which from the brightness distribution of a light beam or plane striking several scanners (16) determines the centre maximum of the light beam or plane and associates same with the optical axis or plane ($E_{10}$, $E_{12}$, $E_{14}$; $E_{20}$, $E_{24}$).

7. Apparatus according to one of the claims 1 to 6, characterized in that the perspective centre (0) in the case of divergently arranged projectors (10, 12, 14) is located on the side of the scale (30) facing the projectors (10, 12, 14) and in the case of convergently arranged projectors (12, 20, 24) on the side of the scale (30) remote from the projectors (10, 12, 14).

8. Apparatus according to one of the claims 1 to 7, characterized in that the computer (18) connected to the optical scanners (16) carries out the calculation of coordinates ($X_0$, $Z_0$) of the perspective centre (0) according to the following trigonometric functions and equations:

$$X_0 = (Y_1 - Y_2) * \frac{(Y_1 * d_2 + Y_2 * d_1) * 2}{(Y_1 - Y_2)^2 + (d_1 + d_2)^2} + X_2$$

$$Z_0 = (d_1 + d_2) * \frac{(Y_1 * d_2 + Y_2 * d_1) * 2}{(Y_1 - Y_2)^2 + (d_1 + d_2)^2}$$

with

$$d_1 = X_2 - X_1, \; d_2 = X_3 - X_2,$$

$$Y_1 = \frac{d_1}{2 * \tan \alpha} \quad Y_2 = \frac{d_2}{2 * \tan \beta}$$

in which $\alpha$ is the projection angle between the perspective centre (0), as well as a first and a second optical axis or plane ($E_{10}$, $E_{12}$; $E_{20}$, $E_{12}$), $\beta$ the projection angle between the perspective centre (0) and a second and third optical axis or plane ($E_{12}$, $E_{14}$; $E_{12}$, $E_{24}$), $X_1$, $X_2$, $X_3$ are individual optical scanners (16) in a row of scanners crossed by the optical axis or plane ($E_{10}$, $E_{12}$, $E_{14}$; $E_{20}$, $E_{24}$), $X_2$ is the crossing with the centre normal of the reference body (38) and $d_1$ and $d_2$ are the centre spacings between the scanners $X_2$ and $X_1$ or $X_3$ and $X_2$, in which $\alpha$ faces the path $d_1$ and $\beta$ the path $d_2$.

9. Apparatus according to claim 8, characterized in that the computer (18) additionally trigonometrically calculates the inclination angle f of the positioning body (36) relative to the reference body (38) according to functions and equations:

$$f = \arctan \left( \frac{d_3}{Z_0} \right)$$

with $d_3 = X_2 - X_0$

$d_3$ being the spacing between the intersection point $X_0$ of the perpendicular of the perspective centre (0) on the scale (30) and the intersection point $X_2$ of the centre normal of the reference body (38) with the scale (30).

10. Apparatus according to one of the claims 1 to 9, characterized in that on the positioning body (36) are provided two parallel scales (30, 32), which are located in one plane and that with each scale (30, 32) is associated a projector system (40, 42) of in each case at least three projectors (10, 12, 14) located on the reference body (38).

11. Apparatus according to one of the claims 1 to 9, characterized in that on the positioning body (36) are provided two scales (30, 34) at an angle of preferably 90° and that with each scale (30, 34) are associated a projector system (40, 42) of in each case at least three projectors (10, 12, 14) located on the reference body (38).

12. Apparatus according to one of the claims 1 to 9, characterized in that on the positioning body (36) are provided three scales (30, 32, 34), whereof two (30, 32) are located in one plane and a third (34) is oriented at an angle of preferably 90° to the two other scales (30, 32) and that with each scale (30, 32, 34) is associated a projector system (40, 42, 44) of in each case at least three projectors (10, 12, 14) located on the reference body (38).

## Revendications

1. Dispositif de détermination de la position d'un corps (36) à positionner par rapport à un corps de référence (38), le corps à positionner (36) portant une règle graduée (30) et les coordonnées ($X_0$ et $Z_0$) d'un centre de projection (0) étant calculées par trigonométrie à partir des angles de projection ( , ) entre le centre de projection (O) et au moins trois marques projetées (A, B, C), et de la distance mutuelle des marques (A, B, C), <u>caractérisé en ce</u> que les marques projetées sur la règle graduée (30) sont des marques lumineuses projetées (A, B, C), en ce que le centre de projection (O) est formé par le point d'intersection commun de l'axe optique ou la ligne d'intersection commune des plans optiques ($E_{10}$, $E_{12}$; $E_{20}$, $E_{24}$) d'au moins trois projecteurs (10, 12, 14; 20, 24) qui sont prévus divergents et/ou convergents vers le corps à positionner (38) et qui émettent les rayons lumineux ou les plans lumineux, et en ce que les marques lumineuses (A, B, C) sont saisies sur la règle graduée (30) par un détecteur (16)

2. Dispositif suivant la revendication 1, <u>caractérisé en ce</u> que les projecteurs (10, 12, 14; 20, 24) sont respectivement constitués par une source lumineuse à laser (26), avec une optique (22) et un diaphragme (28).

3. Dispositif suivant la revendication 1, <u>caractérisé en ce</u> que les projecteurs (10, 12, 14; 20, 24) sont constitués par une source lumineuse à laser commune, avec une optique de répartition de rayons lumineux ou de plans lumineux, et diaphragmes.

4. Dispositif suivant la revendication 2 ou 3, <u>caractérisé en ce</u> que les diaphragmes (28) sont prévus pour produire des rayons lumineux, en tant que diaphragme à trous, et pour produire des plans lumineux, en tant que diaphragme à fentes.

5. Dispositif suivant l'une des revendications 1 à 4, <u>caractérisé en ce</u> que les détecteurs optiques (16) sont formés par une rangée de CCD.

6. Dispositif suivant l'une des revendications 1 à 5, <u>caractérisé en ce</u> que les détecteurs optiques sont reliés à un calculateur (18) qui détermine, à partir de la distribution de la luminosité d'un rayon lumineux ou d'un plan lumineux tombant sur plusieurs détecteurs, le maximum du rayon lumineux ou du plan lumineux et l'affecte à l'axe optique ou au plan optique ($E_{10}$, $E_{12}$, $E_{14}$; $E_{20}$, $E_{24}$).

7. Dispositif suivant l'une des revendications 1 à 6, <u>caractérisé en ce</u> que le centre de projection (O) se trouve près des projecteurs (10, 12, 14) placés divergents sur le côté de la règle graduée (30) tourné vers les projecteurs (10, 12, 14) et près des projecteurs placés convergents (12, 20, 24) sur le côté de la règle graduée (30) tourné vers les projecteurs (10, 12, 14).

8. Dispositif suivant l'une des revendications 1 à 7, <u>caractérisé en ce</u> que le calculateur (18) relié aux détecteurs optiques (16) réalise le calcul des coordonnées ($X_0$, $Y_0$) d'après les fonctions et équations suivantes:

$$X_0 = (Y_1 - Y_2) * \frac{(Y_1 * d_2 + Y_2 * d_1) * 2}{(Y_1 - Y_2)^2 + (d_1 + d_2)^2} + X_2$$

$$Z_0 = (d_1 + d_2) * \frac{(Y_1 * d_2 + Y_2 * d_1) * 2}{(Y_1 - Y_2)^2 + (d_1 + d_2)^2}$$

avec

$$d_1 = X_2 - X_1, \quad d_2 = X_3 - X_2,$$

$$Y_1 = \frac{d_1}{2 * \tan g\ \alpha}, \quad Y_2 = \frac{d_2}{2 * \tan g\ \beta}$$

où $\alpha$ désigne l'angle de projection ayant pour sommet le centre de projection O et compris entre un premier et un second axe ou plan optique ($E_{10}$, $E_{12}$; $E_{20}$; $E_{12}$), $\beta$ désigne l'angle de projection ayant pour sommet le centre de projection (O) et compris entre un deuxième et un troisième axe ou plan optique ($E_{12}$, $E_{14}$; $E_{12}$, $E_{24}$), $X_1$, $X_2$, $X_3$ sont des détecteurs optiques séparés (16) coupés par les axes ou plans optiques ($E_{10}$, $E_{12}$, $E_{14}$; $E_{20}$, $E_{24}$) dans une rangée de détecteurs, $X_2$ étant le point d'intersection avec l'apothème du corps à positionner (38), et $d_1$ et $d_2$ sont les distances de centre à centre des détecteurs $X_2$ et $X_1$, ou $X_3$ et $X_2$, $\alpha$ étant opposé au segment $d_1$ et $\beta$ au segment $d_2$.

9. Dispositif suivant la revendication 8, <u>caractérisé en ce</u> que le calculateur (18) calcule encore par trigonométrie une détermination de l'angle d'inclinaison $f$ du corps à positionner (36) par rapport au corps de référence (38) d'après les fonctions et équations:

$$f = \text{arctang} \left(\frac{d_3}{Z_0}\right)$$

avec $d_3 = X_2 - X_0$
où $d_3$ est la distance comprise entre le point d'intersection $X_0$ de la verticale du centre de projection (0) sur la règle graduée (30) et le point d'intersection $X_2$ de l'apothème du corps de référence (38) avec la règle graduée (30).

10. Dispositif suivant l'une des revendications 1 à 9, <u>caractérisé en ce</u> que, sur le corps à positionner (36), sont placées deux règles graduées parallèles (30, 32) qui sont dans un plan et en ce qu'à chaque règle graduée (30, 32), est affecté un assemblage de projecteurs (40, 42) sur le corps de référence comportant respectivement trois projecteurs (10, 12, 14).

11. Dispositif suivant l'une des revendications 1 à 9, <u>ca-</u>

ractérisé en ce que, sur le corps à positionner (36), sont placées deux règles graduées (30, 34) faisant un angle, de préférence, de 90° et en ce qu'à chaque règle graduée (30, 32), est affecté un assemblage de projecteurs (40, 44) sur le corps de référence comportant respectivement trois projecteurs (10, 12, 14).

12. Dispositif suivant l'une des revendications 1 à 9, caractérisé en ce que, sur le corps à positionner (36), sont placées trois règles graduées (30, 32, 34) dont deux (30, 32) sont dans un plan et la troisième (34) est orientée en faisant un angle, de préférence, de 90° par rapport aux deux autres règles graduées (30, 32) et en ce qu'à chaque règle graduée (30, 32, 34) est affecté un assemblage de projecteurs (40, 42, 44) placés sur le corps de référence (38) composé d'au moins trois projecteurs (10, 12, 14).

Fig.1

Fig.2

Fig.3

Fig.4

**FIG.5**